# FASCICULE DE BREVET EUROPEEN

(11) **EP 0 934 994 B1**
(45) Date de publication et mention de la délivrance du brevet: **09.04.2003**
(21) Numéro de dépôt: 99440011.7
(22) Date de dépôt: 22.01.1999
(51) Int. Cl.: C09K 17/18, C09K 17/26, C09K 17/36, E21D 9/00

(54) **Produit collant, souple et ininflammable, en particulier pour la consolidation des terrains**
Nicht-entflammbares, kleberiges,flexibles Produkt für Bodenverfestigung
Non-flammable, sticky ,flexible product especially for the consolidation of grounds

(30) Priorité: 05.02.1998 FR 9801516
(43) Date de publication de la demande: 11.08.1999
(73) Titulaire: A. WEBER, S.A., F-57520 Rouhling (FR)
(72) Inventeur: Weber, Franck, 57520 Rouhling (FR); Weber, Adolphe, 57520 Rouhling (FR)
(74) Mandataire: Nuss, Pierre

(56) Documents cités:
- DE-B- 1 228 569
- FR-A- 2 457 964
- FR-A- 2 484 529
- FR-A- 2 686 123
- GB-A- 1 040 086
- GB-A- 1 183 070
- US-A- 3 091 936

## Description

La présente invention concerne le domaine de l'exploitation minière et des travaux publics, en particulier de la consolidation des terrains ou du charbon, la réalisation de barrages, ainsi que le remplissage de cavités et l'étanchement à l'air et au gaz, par injection, projection ou remplissage, et a pour objet un produit collant, souple et ininflammable destiné à cet effet.

Actuellement, dans le cadre de l'exploitation minière, et notamment de celle du charbon, il est couramment fait appel à des résines phénoliques du type résol ou autres dans la formulation de produits de consolidation, de réalisation de barrages et de remplissage ou d'étanchement. En effet, les résines phénoliques du fait de leurs propriétés d'ininflammabilité, se prêtent particulièrement bien à la préparation de produits qui peuvent, soit être en contact avec des matières inflammables telles que le charbon, soit être utilisés dans les zones à risque d'échauffement ou de feu.

Des compositions de produits moussants d'injection ou de remplissage, à base d'un résol contenant un porogène et d'un catalyseur contenant entre autres des acides sulfoniques, sont connues, notamment par FR-A-2 484 529, DE-A-39 11 477, FR-A-2 667 352 et FR-A-1 519 474. Ces produits connus permettent, certes, de satisfaire à leur objectif essentiel, mais présentent tous l'inconvénient d'être cassants après polymérisation et de ne pas coller correctement les couches de charbon fissurées ou de terrain entre-elles, ce quels que soient les supports. En outre ces produits manquent de flexibilité.

On connaît également, par US-A-3 091 936 une composition, dont l'élément réactif principal, formant le corps du polymère, est composé de polyesters insaturés. Dans ce mode de réalisation, une inhibition de la réaction est obtenue par addition en très faible quantité, à savoir de l'ordre de 0,002% à 0,02%, de résol et de phénol. Cependant, une telle addition ne permet pas l'obtention d'une ininflammabilité, généralement nécessaire pour les utilisations liées à une sécurité contre le feu. De même, FR-A-2 686 123 décrit une résine phénolique auto-moussante destinée exclusivement à la réalisation de barrages et de remplissages de vides. Le produit obtenu ne présente, toutefois, pas une flexibilité suffisante pour consolider correctement des terrains.

La présente invention a pour but de pallier ces inconvénients en proposant un produit collant, souple et ininflammable destiné à la consolidation des terrains en général et plus particulièrement des couches de charbon, ce produit étant mis en oeuvre par injection, remplissage ou projection.

Conformément à l'invention, ce produit est caractérisé en ce qu'il est un bicomposant, à savoir une résine à base d'un résol additionné de polyesters linéaires et un catalyseur comportant, outre des acides sulfoniques, un précondensat résorcine-formol, le rapport de mélange résine/catalyseur étant préférentiellement compris entre 1:1 et 4:1.

La caractéristique principale de la présente invention réside dans l'addition de polyesters linéaires au résol, ce qui, lors de la polymérisation en couche mince lui confère une excellente flexibilité et la stabilité dans le temps. En outre, du fait de l'addition d'un précondensat résorcine-formol au catalyseur, la réactivité du mélange, lors de la mise en oeuvre du produit, sera optimale.

Selon une caractéristique de l'invention, le produit collant, souple et ininflammable peut être modifié par remplacement, dans le précondensat résorcine-formol, de tout ou d'une partie de la résorcine par l'un au moins des composants suivants pris seuls ou en combinaison :
- phénol
- crésols
- alkylphénols tels que :
   - para tertio butyl phénol
   - para tertio octyl phénol
   - para nonyl phénol
- xylénols
- bisphénol A.

Par ailleurs, il est possible de modifier le produit collant, souple et ininflammable selon l'invention par remplacement des polyesters linéaires par les agents de flexibilité miscibles au résol suivants, pris seuls ou en combinaison :
- polyols (dont glycols)
- polyesters saturés
- acrylates et polyacrylates
- phtalates, adipates, sebaçates, succinates, mellitates
- polyamides
- polyvinylacétates
- NBR (caoutchouc nitrile butadiène)
- latex à base de polychloropène
- latex à base de styrène/butadiène
- latex à base de styrène/acrylate
- latex sur base acrylonitrile

Selon une autre caractéristique de l'invention, le composant résine comporte, en outre, un organo-silane destiné à favoriser l'adhésion, en particulier sur tout support minéral.

Conformément à une autre caractéristique de l'invention, le composant résine peut être additionné d'alcool furfurylique. Une telle adjonction permet d'augmenter, si nécessaire, la réactivité du mélange, de sorte que le mélange final de produit collant peut être parfaitement adapté aux conditions d'application.

De préférence, le rapport de mélange des composants résine et catalyseur, qui peut varier de 1:1 à 4:1, est de 1:1. Ce rapport de mélange est une caractéristique très importante pour la mise en oeuvre du produit conforme à l'invention, car le matériel d'injection couramment utilisé dans les mines est spécialement conçu pour des rapports de cet ordre de grandeur.

La composition du produit objet de l'invention est telle que, même en fine couche, le produit polymérise tout en restant souple et flexible avec une grande stabilité dans le temps. Cette caractéristique physique est essentielle pour permettre d'assurer, d'une part, l'étanchéité à l'air et aux gaz et en particulier au méthane qui s'infiltre par des fissures microscopiques et, d'autre part, le collage, même en cas de mouvements de terrain, qui sont très courants dans le domaine minier.

Selon une autre caractéristique de l'invention, pour l'obtention d'une expansion du produit final, le composant résine est avantageusement complété par ajout d'un agent porogène, tel que le bicarbonate de sodium, et d'un agent tensio-actif compatible avec le système, tel que, de préférence, une huile de ricin éthoxylée.

Un ajout d'agent porogène permet l'obtention d'un produit final, dont l'expansion peut varier de 0 à 20 en fonction du pourcentage d'agent porogène rajouté. L'addition de l'agent tensio-actif permet de stabiliser le complexe alvéolaire formé par la réaction du bicarbonate de sodium avec l'acide sulfonique.

Par variation du rapport polyesters ou autres agents de flexibilité/résol il est possible de réaliser une variation parallèle des rapports flexibilité/cohésion et flexibilité/adhésion. En effet, une augmentation de la charge de polyester ou autres agents de flexibilité, donc du pourcentage de chaînes longues, a pour conséquence une augmentation de la flexibilité au détriment de l'adhérence ou adhésion, alors qu'à l'inverse une augmentation du taux de résol permet une meilleure cohésion du système, du fait de sa ramification, et donc un collage amélioré.

Une variation du rapport acide sulfonique sur précondensat résorcine-formol ou composants de remplacement permet d'ajuster la réactivité du produit final en fonction des conditions de mise en oeuvre : température, rapport de mélange, temps de prise lent ou rapide. Ainsi, une augmentation du pourcentage d'acide sulfonique entraîne une accélération de la cinétique réactionnelle, alors qu'une augmentation du taux de précondensat résorcine ou composants de remplacement/formol ralentit la cinétique, tout en améliorant la cohésion du système. Les variations et effets précités permettent donc une adaptation fine aux spécifications, à savoir la flexion, le collage et la vitesse de réaction, nécessaires à l'utilisation dans différentes conditions.

Les polyesters linéaires sont, de préférence, des polyesters insaturés et l'acide sulfonique est, de préférence du type phénol, toluène ou xylène.

A titre d'exemple, le produit conforme à l'invention présente la composition préférentielle suivante :
- Composant résine :

| | |
|---|---|
| Résol | 46 % |
| Polyester | 46 % |
| Organo silane | 1 % |
| Eau | 6 % |
| Alcool furfurylique | 1 % |

- Composant catalyseur :

| | |
|---|---|
| Acide sulfonique (phénol, toluène, xylène) | 48,5 % |
| Précondensat résorcine-formol | 48,5 % |
| Urée | 3 % |

le rapport dans le mélange entre le composant résine et le composant catalyseur étant de 1:1.

Grâce à l'invention, il est possible de réaliser un produit collant plus particulièrement applicable dans le domaine de l'exploitation minière et des travaux publics, en particulier pour la consolidation des terrains ou du charbon, la réalisation de barrages, ainsi que le remplissage de cavités et l'étanchement à l'air et au gaz.

Ce produit permet l'obtention d'une bonne adhérence sur tout type de support, à savoir la pierre, le schiste, le charbon, etc..., et son pouvoir collant assure une bonne consolidation des terrains.

En outre, ce produit, qui est ininflammable, reste souple et flexible dans le temps, après polymérisation, de sorte que la cohésion des terrains après consolidation est maintenue face aux convergences naturelles des sols.

Bien entendu, l'invention n'est pas limitée au mode de réalisation décrit. Des modifications restent possibles, notamment du point de vue de la composition des composantes du produit ou par substitution d'équivalents techniques ou chimiques, sans sortir pour autant du domaine de protection de l'invention.

## Revendications

1. Produit collant, souple et ininflammable, en particulier pour la consolidation des terrains ou du charbon, la réalisation de barrages, ainsi que le remplissage de cavités et l'étanchement à l'air et au gaz, par injection, projection ou remplissage, **caractérisé en ce qu'**il est un bicomposant, à savoir une résine à base d'un résol additionné de polyesters linéaires et un catalyseur comportant, outre des acides sulfoniques, un précondensat résorcine-formol, le rapport de mélange résine/catalyseur étant préférentiellement compris entre 1:1 et 4:1.

2. Produit, suivant la revendication 1, **caractérisé en ce qu'**il est modifié par remplacement, dans le précondensat résorcine-formol, de tout ou d'une partie de la résorcine par l'un au moins des composants suivants pris seuls ou en combinaison :
- phénol
- crésols
- alkylphénols tels que :
- para tertio butyl phénol
- para tertio octyl phénol
- para nonyl phénol
- xylénols
- bisphénol A.

3. Produit, suivant la revendication 1, **caractérisé en ce qu'**il est modifié par remplacement des polyesters linéaires par les agents de flexibilité miscibles au résol suivants, pris seuls ou en combinaison :
- polyols (dont glycols)
- polyesters saturés
- acrylates et polyacrylates
- phtalates, adipates, sebaçates, succinates, mellitates
- polyamides
- polyvinylacétates
- NBR (caoutchouc nitrile butadiène)
- latex à base de polychloropène
- latex à base de styrène/butadiène
- latex à base de styrène/acrylate
- latex sur base acrylonitrile

4. Produit, suivant l'une quelconque des revendications 1 à 3, **caractérisé en ce que** le composant résine comporte, en outre, un organo-silane destiné à favoriser l'adhésion, en particulier sur tout support minéral.

5. Produit, suivant l'une quelconque des revendications 1 à 3, **caractérisé en ce qu'**il est additionné d'alcool furfurylique.

6. Produit, suivant l'une quelconque des revendications 1 à 3, **caractérisé en ce que** le rapport de mélange des composants résine et catalyseur est, de préférence, de 1:1.

7. Produit, suivant l'une quelconque des revendications 1 à 3, **caractérisé en ce que**, pour l'obtention d'une expansion, le composant résine est complété par ajout d'un agent porogène, tel que le bicarbonate de sodium, et d'un agent tensio-actif, tel que, de préférence, une huile de ricin éthoxylée.

8. Produit, suivant l'une quelconque des revendications 1 à 7, **caractérisé en ce qu'**il présente la composition préférentielle suivante :
- Composant résine :
| | |
|---|---|
| Résol | 46 % |
| Polyester | 46 % |
| Organo silane | 1 % |
| Eau | 6 % |
| Alcool furfurylique | 1 % |
- Composant catalyseur :
| | |
|---|---|
| Acide sulfonique (phénol, toluène, xylène) | 48,5 % |
| Précondensat résorcine-formol | 48,5 % |
| Urée | 3 % |
le rapport dans le mélange entre le composant résine et le composant catalyseur étant de 1:1.

## Claims

1. Non-flammable, flexible and adhesive product, in particular for the consolidation of ground or coal, the production of barriers as well as the filling of cavities and sealing from air and gas, by injection, spraying or filling, **characterised in that** it is a two-pack product, in particular a resin based on resol with added linear polyesters and a catalyst comprising, apart from sulphonic acids, a resorcinol-formol precondensate, the ratio of the resin/catalyst mixture preferably being between 1:1 and 4:1.

2. Product according to claim 1, **characterised in that** it is modified by replacement, in the resorcinol-formol precondensate, of all or some of the resorcinol by at least one of the following components alone or in combination:
- phenol
- cresols
- alkyl phenols such as:
- para tertiary butyl phenol
- para tertiary octyl phenol
- para nonyl phenol
- xylenols
- bisphenol A

3. Product according to claim 1, **characterised in that** it is modified by replacing the linear polyesters by the following plasticisers which can be mixed with resol, alone or in combination:
- polyols (including glycols)
- saturated polyesters
- acrylates and polyacrylates
- phthalates, adipates, sebacates, succinates, mellitates
- polyamides
- polyvinyl acetates
- NBR (nitrile butadiene rubber)
- latex based on polychloroprene
- latex based on styrene/butadiene
- latex based on styrene/acrylate
- latex based on acrylonitrile

4. Product according to any one of claims 1 to 3, **characterised in that** the resin component also comprises an organosilane intended to encourage adhesion, in particular on any mineral support.

5. Product according to any one of claims 1 to 3, **characterised in that** furfuryl alcohol is added thereto.

6. Product according to any one of claims 1 to 3, **characterised in that** the mixing ratio of the resin and catalyst components is preferably 1:1.

7. Product according to any one of claims 1 to 3, **characterised in that**, to achieve expansion, the resin component is completed by adding a foaming agent, such as sodium bicarbonate and a surfactant, such as, preferably, an ethoxylated castor oil.

8. Product according to any one of claims 1 to 7, **characterised in that** it preferably has the following composition:
- resin component:
| | |
|---|---|
| resol | 46% |
| polyester | 46% |
| organosilane | 1% |
| water | 6% |
| furfuryl alcohol | 1% |
- catalyst component:
| | |
|---|---|
| sulphonic acid (phenol, toluene, xylene) | 48.5% |
| resorcinol-formol precondensate | 48.5% |
| urea | 3% |
The ratio in the mixture between the resin component and the catalyst component being 1:1.

## Patentansprüche

1. Klebendes, weiches und unentzündliches Mittel, insbesondere zur Festigung des Erdreichs oder der Kohle, für die Ausbildung von Dämmen, sowie zum Füllen von Hohlräumen und zur Luft- und Gasabdichtung, durch Einspritzen, Spritzen oder Auffüllen, **dadurch gekennzeichnet, dass** es eine Bikomponente ist, nämlich ein Harz auf der Basis eines Resol, dem lineare Polyester zugefügt sind, und ein Katalysator, welcher neben Sulfosäuren ein Resorcin-Formol-Vorkondensat enthält, wobei das Mischungsverhältnis Harz/Katalysator vorzugsweise 1 : 1 bis 4 : 1 beträgt.

2. Mittel nach Anspruch 1, **dadurch gekennzeichnet, dass** es modifiziert wird, indem in dem Resorcin-Formol-Vorkondensat das gesamte Resorcin oder ein Teil dessen durch wenigstens eine der folgenden Komponenten, einzeln oder in Verbindung miteinander, ersetzt wird:
- Phenol
- Kresole
- Alkylphenole wie:
- Paratertiobutylphenol
- Paratertiooctylphenol
- Paranonylphenol
- Xylenole
- A Bisphenol.

3. Mittel nach Anspruch 1, **dadurch gekennzeichnet, dass** es modifiziert wird, indem die linearen Polyester durch die folgenden mit dem Resol mischbaren Elastizitätsmittel, einzeln oder in Verbindung miteinander, ersetzt werden:
- Polyalkohole (darunter Glykole)
- gesättigte Polyester
- Acrylate und Polyacrylate
- Phthalate, Adipate, Sebacate, Succinate, Mellitate
- Polyamide
- Polyvinylacetate
- NBR (Nitril-Butadienkautschuk)
- Latex auf der Basis von Polychloropren
- Latex auf der Basis von Styrol-Butadien
- Latex auf der Basis von Styrol-Acrylat
- Latex auf der Basis von Acrylnitril

4. Mittel nach irgendeinem der Ansprüche 1 bis 3, **dadurch gekennzeichnet, dass** die Harzkomponente außerdem ein Organosilan zur Begünstigung der Bindekraft, insbesondere auf jedwedem mineralischen Träger, enthält.

5. Mittel nach irgendeinem der Ansprüche 1 bis 3, **dadurch gekennzeichnet, dass** ihm Furfurylalkohol zugefügt wird.

6. Mittel nach irgendeinem der Ansprüche 1 bis 3, **dadurch gekennzeichnet, dass** das Mischungsverhältnis der Komponenten Harz und Katalysator vorzugsweise 1 : 1 beträgt.

7. Mittel nach irgendeinem der Ansprüche 1 bis 3, **dadurch gekennzeichnet, dass** zum Erzielen einer Ausdehnung die Harzkomponente durch Zugabe eines Porenbildners, wie beispielsweise Natriumbicarbonat, sowie eines Netzhaftmittels, wie zum Beispiel vorzugsweise ein ethoxyliertes Rizinusöl, ergänzt wird.

8. Mittel nach irgendeinem der Ansprüche 1 bis 7, **dadurch gekennzeichnet, dass** es die folgende bevorzugte Zusammensetzung aufweist:
- Harzkomponente:
| | |
|---|---|
| Resol | 46 % |
| Polyester | 46 % |
| Organosilan | 1 % |
| Wasser | 6 % |
| Furfurylalkohol | 1 % |
- Katalysatorkomponente:
| | |
|---|---|
| Sulfosäure (Phenol, Toluol, Xylol) | 48,5 % |
| Resorcin-Formol-Vorkondensat | 48,5 % |
| Urea | 3 % |
wobei das Verhältnis in der Mischung zwischen der Harzkomponente und der Katalysatorkomponente 1 : 1 beträgt.
